# EUROPÄISCHE PATENTSCHRIFT

(11) **EP 2 837 314 B1**
(45) Veröffentlichungstag und Bekanntmachung des Hinweises auf die Patenterteilung: **27.06.2018**
(21) Anmeldenummer: 14179024.6
(22) Anmeldetag: 30.07.2014
(51) Int. Cl.: A47J 43/044, A47J 43/07

(54) **Küchengerät mit Hebeleinrichtung und Stellglied**
Kitchen appliance with lever device and actuator
Ustensile de cuisine doté d'un dispositif de levier et actionneur

(30) Priorität: 14.08.2013 DE 102013216086
(43) Veröffentlichungstag der Anmeldung: 18.02.2015
(73) Patentinhaber: BSH Hausgeräte GmbH, 81739 München (DE)
(72) Erfinder: Brecko, Ales, 3000 Celje (SI); Cater, Matej, 3301 Petrovce (SI); Strojansek, Aleksander, 3331 Nazarje (SI)

(56) Entgegenhaltungen:
- WO-A1-2011/147675
- WO-A1-2012/025430

## Beschreibung

### Gebiet der Erfindung

Die Erfindung betrifft ein Küchengerät gemäß des Oberbegriffs des Anspruchs 1 und ein Verfahren zum Justieren einer Hebeleinrichtung, die zum Unterstützen einer Schwenkbewegung eines Schwenkarms eines Küchengeräts eingerichtet ist.

### Hintergrund der Erfindung

Die WO 2011/147675 A1 zeigt und beschreibt ein Küchengerät mit einem Grundkörper und einem Schwenkarm, der an einer Lagerstelle schwenkbar am Grundkörper angeordnet ist. Dabei ist vorgesehen, dass das Küchengerät eine Hebeleinrichtung zum Unterstützen einer Schwenkbewegung des Schwenkarms aufweist. Auf diese Weise kann ein für einen Benutzer sicherer Betrieb bereitgestellt werden, da die Bewegung des Schwenkarms stets durch die Hebeleinrichtung kontrolliert wird.

Aus der Offenlegungsschrift WO 2012/025430 A1 ist ein Küchengerät bekannt, das einen Grundkörper, einen Schwenkarm, der schwenkbar am Grundkörper angeordnet ist und eine Hebeleinrichtung zum Unterstützen einer Schwenkbewegung des Schwenkarms aufweist. Es ist ein Mittel zum Justieren der Hebeleinrichtung offenbart, das dergestalt ausgebildet ist, um das Maß des Unterstützens der Schwenkbewegung einzustellen. Ein Stellglied ist zu diesem Zweck am Grundkörper des Küchengeräts um eine Drehachse drehbar gelagert. Das Mittel zum Justieren gewährleistet ein gleichbleibendes Maß an Unterstützung trotz herstellungsbedingten und/oder montagebedingten Toleranzen, die zu unterschiedlichem Funktionsverhalten der verwendeten Bauteile führen können.

### Der Erfindung zugrundeliegende Aufgabe

Der Erfindung liegt die Aufgabe zugrunde, ein Küchengerät zu schaffen, das gegenüber dem Stand der Technik verbessert ist, sowie Verfahren zu schaffen, mit denen Hebeleinrichtungen in Küchengeräten verbessert eingesetzt werden können. Insbesondere soll ein Küchengerät geschaffen werden, bei dem Einstellungen an einer Hebeleinrichtung benutzerfreundlicher, kostengünstiger, einfacher, oder auch exakter durchgeführt werden können.

### Erfindungsgemäße Lösung

Die Bezugszeichen in sämtlichen Ansprüchen haben keine einschränkende Wirkung, sondern sollen lediglich deren Lesbarkeit verbessern.

Die der Erfindung zugrundeliegende Aufgabe wird durch ein Küchengerät mit einem Grundkörper, einem Schwenkarm, der schwenkbar am Grundkörper angeordnet ist, einer Hebeleinrichtung zum Unterstützen einer Schwenkbewegung des Schwenkarms, und einem Mittel zum Justieren der Hebeleinrichtung gemäß des Oberbegriffs des Anspruchs 1 gelöst, wobei zusätzlich vorgesehen ist, dass das Mittel zum Justieren der Hebeleinrichtung ein Stellglied umfasst, das linear translatierbar ist, um die Hebeleinrichtung zu justieren.
Ferner wird die Aufgabe durch ein Verfahren zum Justieren einer Hebeleinrichtung eines Küchengeräts, wobei die Hebeleinrichtung zum Unterstützen einer Schwenkbewegung eines Schwenkarms eines Küchengeräts eingerichtet ist, gemäß Anspruch 12 gelöst, wobei das Verfahren den Schritt umfasst, die Hebeleinrichtung durch lineares Translatieren eines Stellgliedes zu justieren.

Ein Küchengerät im Sinne der vorliegenden Erfindung ist eine elektrisch oder mechanisch antreibbare Standküchenmaschine, insbesondere eine Universalküchenmaschine. Das Küchengerät ist zur Bearbeitung von Nahrungsmitteln vorgesehen und umfasst zu diesem Zweck Bearbeitungswerkzeuge für Nahrungsmittel, beispielsweise zum Mixen, Kneten, Häckseln, Schneiden, Pürieren oder Entsaften, oder Kupplungen zur Aufnahme solcher Bearbeitungswerkzeuge.

Der Grundkörper des Küchengeräts ist im Sinne dieser Erfindung das Element des Küchengeräts, das im Betriebszustand des Küchengeräts auf einer Unterlage, wie beispielsweise einer Küchenarbeitsplatte, abgestellt ist, also mit ihr über Standfüße, beispielsweise an einer Bodenwand, oder auch direkt über eine Bodenwand in Kontakt steht.

Der Schwenkarm ist im Sinne dieser Erfindung das Element des Küchengeräts, an dem Bearbeitungswerkzeuge angebracht sind oder mittels Kupplungen angebracht werden können. Ein Schwenkarm kann eine oder mehrere Bearbeitungswerkzeuge und/oder Kupplungen aufweisen. Der Schwenkarm ist gegenüber dem Grundkörper verschwenkbar und am Grundkörper angeordnet.

Ein Vorteil eines translatierbaren Stellgliedes kann sich daraus ergeben, dass dieses Stellglied über eine verhältnismäßig lange Strecke bewegt werden kann, sodass eine größere Wirkung in Bezug auf mögliche Einstellungen hinsichtlich der Justage der Hebeleinrichtung erreichbar ist, beispielsweise auf Einstellungen in Bezug auf eine verstellbare Kraftwirkung, die durch die Hebeleinrichtung auf den Schwenkarm der Küchenmaschine ausgeübt werden kann. Außerdem kann ein größerer Wertebereich möglicher Justagewerte der Hebeleinrichtung bereitgestellt werden, so dass beispielsweise höhere Maximalwerte oder auch niedrigere Minimalwerte als bisher hinsichtlich eines Funktionsintervalls der Hebeleinrichtung möglich sind. Beispielsweise kann eine größere oder kleinere Kraftwirkung der Hebeleinrichtung als bisher einstellbar sein, unter weitgehender Beibehaltung der bisher verwendeten Komponenten. Auch wird es möglich, durch die Nutzung eines translatierbar eingerichteten Stellgliedes die Justage der Hebeleinrichtung über Bereiche des Küchengerätes durchzuführen, die beim Betrieb der Küchenmaschine auf natürliche Weise verdeckt sind, sodass zusätzliche Abdeckungen, die aus ästhetischen Gründen sonst bevorzugt wären, eingespart werden können und der Benutzer derartige Abdeckungen nicht mehr vor und nach dem Justieren der Hebeleinrichtung betätigen muss. So kann ein Küchengerät benutzerfreundlicher gestaltet werden, es kann kostengünstiger und einfacher ausgeführt sein und zudem können Justierungen an der Hebeleinrichtung exakter vorgenommen werden.

### Bevorzugte Ausgestaltung der Erfindung

Vorteilhafte Aus-und Weiterbildungen sind Gegenstand der abhängigen Ansprüche.

Vorzugsweise ist das Mittel zum Justieren der Hebeleinrichtung dergestalt ausgebildet, das Maß des Unterstützens der Schwenkbewegung einzustellen. Prinzipiell kommt ein translatierbares Stellglied zum Justieren der Hebeleinrichtung für eine Vielzahl von Hebeleinrichtungen in Küchengeräten in Frage. Jedoch ist eine der wichtigsten Anwendungen das Justieren von Hebeleinrichtungen, die das Maß des Unterstützens der Schwenkbewegung einstellen. Ein Küchengerät weist eine Vielzahl unterschiedlicher Bauteile auf, die sich herstellungsbedingt unterschiedlich verhalten. So kann beispielsweise eine Lagerstelle zwischen Schwenkarm und Grundkörper abhängig von den verwendeten Bauteilen ein von Küchengerät zu Küchengerät unterschiedliches Reibungsverhalten aufweisen. Die Hebeleinrichtung würde daher, falls sie für alle Küchengeräte gleich ausgeführt ist, die Schwenkbewegung des Schwenkarms nicht mehr genau und sicher für einen Benutzer unterstützen können. Ist das Mittel zum Justieren der Hebeleinrichtung dergestalt ausgebildet, das Maß des Unterstützens der Schwenkbewegung einzustellen, kann ein gleichbleibendes Maß an Unterstützung trotz herstellungsbedingten und/oder montagebedingten Toleranzen, die zu unterschiedlichen Funktionsverhalten der verwendeten Bauteile führen können, gewährleistet werden. Durch die Translation des Stellgliedes kann also eine Kraft bestimmt werden, mit der das Mittel zum Justieren der Hebeleinrichtung auf die Hebeleinrichtung wirkt, wodurch eine Kraft beeinflusst werden kann, die zum Schwenken des Schwenkarms aufgewendet werden muss.

Es ist bevorzugt, dass das Mittel zum Justieren der Hebeleinrichtung eine Justierwelle umfasst, die mit dem Stellglied wirkverbunden ist, um das Stellglied durch Betätigen der Justierwelle zu translatieren. Wird das Mittel zum Justieren der Hebeleinrichtung über eine Justierwelle justiert, so ist es möglich, die Justierwelle an prinzipiell beliebiger Stelle aus dem Grundkörper des Küchengerätes herauszuführen und dort betätigbar einzurichten, und über einen Kraftübertragungszug ein Betätigen auf das translatierbare Stellglied zu gewährleisten. So kann die Konstruktion des Mittels zum Justieren der Hebeleinrichtung an den geometrischen Gegebenheiten des Grundkörpers des Küchengeräts ausgerichtet werden und ungeachtet dessen ein translatierbares Stellglied zum Justieren der Hebeleinrichtung bereitgestellt werden. Vorzugsweise ist die Justierwelle derart eingerichtet, dass sie zwei Enden aufweist. Besonders bevorzugt ist, dass ein erstes Ende auf das Stellglied des Mittels zum Justieren der Hebeleinrichtung einwirkt und ein zweites Ende eine Betätigung zum Betätigen der Justierwelle aufweist. So kann eine besonders vorteilhafte Kraftübertragung sichergestellt werden. Alternativ kann aber auf eine Justierwelle verzichtet werden und das Translatieren des Stellgliedes direkt erfolgen, das Stellglied also beispielsweise von Hand unmittelbar verschoben werden. In derartigen Ausführungsformen kann eine Justierwelle eingespart werden.

In einer bevorzugten Ausführungsform ist die Justierwelle mit einem ersten Ende in einer Mutter im Stellglied um eine Symmetrieachse drehbar festgelegt, wobei die Mutter seitens des Stellglieds rotationsfest und bezogen auf das Stellglied ortsfest festgelegt ist. Eine derartige Konstruktion kann sehr einfach aufgebaut sein. So kann eine direkte Kraftübertragung von der Justierwelle auf das Stellglied ermöglicht werden, die kostengünstig und wirksam zugleich ist. Durch Betätigen der Justierwelle kann das Stellglied sehr einfach und exakt translatiert werden. Das Stellglied wird dann durch Rotieren der Justierwelle translatiert. Eine bevorzugte Mutter ist aus einem Metall oder einer Metallegierung hergestellt. Alternativ kann die Mutter auch aus einem Kunststoff, vorzugsweise einem Polymer hergestellt sein. Vorzugsweise ist die Mutter innerhalb des Stellglieds angeordnet und wird von dem Stellglied derart eingehaust, dass sie für die Justierwelle zugänglich ist. In anderen Ausführungsformen ist die Mutter außen an einer Außenwand des Stellglieds angeordnet. In alternativen Ausführungsformen erfolgt die Kraftübertragung an das Stellglied nicht unmittelbar über die Justierwelle, sondern zusätzlich über ein zwischengeschaltetes Getriebe, vorzugsweise ein Zahnradgetriebe, sodass eine Direktübertragung oder eine Kraftübersetzung, gegebenenfalls eine schaltbare Kraftübersetzung, zwischen Justierwelle und Stellglied bereitgestellt werden kann. Ein bevorzugtes Stellglied hat eine im Wesentlichen quaderförmige Gestalt, besonders vorzugsweise die Gestalt eines viereckigen Zylinders.

Besonders bevorzugt ist, dass die Justierwelle als Schraube mit einem Schraubkopf ausgeführt ist. Eine derartig einfach ausgeführte Justierwelle bedarf keiner besonderen konstruktiven Planung, da Schrauben dem Durchschnittsfachmann grundsätzlich bekannt sind und in großer Anzahl und Gestaltung zur Verfügung stehen. Bereits während des Herstellungsprozesses des Küchengeräts kann durch werksseitiges Betätigen der Schraube über den Schraubkopf die Hebeleinrichtung justiert werden, sodass etwaige Fertigungstoleranzen im Kraftzug zwischen Schraube und Schwenkarm ausgeglichen werden können. Dem Benutzer kann auf diese Weise ein Küchengerät mit gleichbleibender Qualität auch zwischen unterschiedlichen Produktionsserien zur Verfügung gestellt werden. Der Schraubkopf kann entweder so ausgeführt sein, dass die Schraube per Werkzeug betätigbar ist, beispielsweise mittels eines Schraubendrehers oder auch mittels eines Schraubenschlüssels, oder aber dass die Schraube manuell betätigbar ist, beispielsweise über eine Handhabe. Die Ausführungsform, in der die Schraube per Werkzeug betätigbar ist, ist für solche Ausführungsformen bevorzugt, bei denen eine nachträgliche Korrektur der Justierung durch den Benutzer nicht erwünscht ist. Es kann dann ein spezieller Schraubkopf mit einer Werkzeugkupplung eingesetzt werden, die für einen Benutzer nicht oder nur erschwert betätigbar ist, so dass nur eine werksseitige Einstellung vorgesehen ist. Soll hingegen, wie für andere Ausführungsformen vorgeschlagen, auch der Benutzer eine Justierung durchführen können, beispielsweise, wenn durch benutzungsbedingte Abnutzung die Schwenkbewegung des Schwenkarms durch die Hebeleinrichtung nicht mehr ausreichend unterstützt wird, so kann an der Schraube, insbesondere am Schraubkopf, vorzugsweise eine Handhabe vorgesehen sein, die ein einfaches Betätigen der Justierwelle für Jedermann erlaubt. Eine bevorzugte Justierwelle ist aus einem Metall oder einer Metallegierung hergestellt. Alternativ kann die Justierwelle auch aus einem Kunststoff, vorzugsweise einem Polymer hergestellt sein.

Vorzugsweise ist das Mittel zum Justieren der Hebeleinrichtung an einer Bodenwand des Küchengeräts betätigbar. Besonders vorzugsweise ist die Justierwelle für das Stellglied durch die Bodenwand des Küchengeräts betätigbar. Ein besonderer Vorteil dieser Ausführungsform kann sich dadurch ergeben, dass die Bodenwand des Küchengeräts im Betriebszustand des Küchengerätes vorzugsweise parallel zu einer Aufstellfläche der Betriebsumgebung, auf der das Küchengerät auflastet, ausgerichtet ist. Das heißt, dass die Rotationsachse der Justierwelle in einem Betriebszustand des Küchengerätes vorzugsweise im Wesentlichen parallel zur Flächennormalen der Bodenwand des Küchengeräts verläuft, besonders vorzugsweise auch parallel zur Flächennormalen der Aufstellfläche der Betriebsumgebung. Dann ist die Justierwelle vom Benutzer vorteilhafterweise nicht zu sehen und kann auch nur noch erschwert versehentlich betätigt werden. Auf eine Abdeckung, die ansonsten möglicherweise aus ästhetischen oder Sicherheitsgründen sinnvoll wäre, um das Mittel zum Justieren der Hebeleinrichtung und insbesondere deren Justierwelle zu verdecken, kann daher verzichtet werden. So kann der Aufbau des Küchengeräts vereinfacht werden und die Produktion günstiger werden.

Zudem wird die Benutzerfreundlichkeit verbessert, weil der Benutzer nicht mehr an der Abdeckung hantieren muss. In anderen Ausführungsformen kann vorgesehen sein, dass das Mittel zum Justieren der Hebeleinrichtung an einer Seitenwand oder an einer oberen Abdeckung des Küchengerätes betätigbar ist. Beispielsweise kann die Justierwelle durch die obere Abdeckung oder eine Seitenwand des Küchengerätes betätigbar sein. So kann die Justierwelle für den Benutzer leichter erreichbar sein. Dann ist besonders vorzugsweise über einen Kraftübertragungszug, nochmals besonders vorzugsweise realisiert durch ein Zahnradgetriebe, eine Kraftübertragung zwischen Justierwelle und Stellglied möglich. Ist keine Justierwelle vorgesehen, so gilt das in diesem Absatz genannte gleichermaßen auch für solche Stellglieder, die ohne Verwendung einer Justierwelle translatiert werden können.

In einer bevorzugten Ausführungsform ist im Grundkörper ein Führungsabschnitt bereitgestellt, um das Stellglied senkrecht zur Translationsrichtung zu stabilisieren. Auf diese Weise kann der Produktionsprozess des Küchengerätes vereinfacht werden und auch eine exaktere Einstellung des Stellglieds ermöglicht werden. Bei der Herstellung des Küchengerätes kann das Stellglied in den Führungsabschnitt eingesetzt werden, sodass es insbesondere radial gehalten wird, wodurch das Zusammensetzen des Küchengeräts beschleunigt werden kann. Es wird also eine vereinfachte Montage möglich. Auch für den Betrieb des Stellgliedes kann eine solche Ausführungsform vorteilhaft sein, da der Schwenkarm beispielsweise beim Bearbeiten von Nahrungsmitteln in Schwingungen versetzt werden kann, die sich durch Bereitstellen eines Führungsabschnittes im Grundkörper nur noch vermindert auf das Stellglied auswirken können. So kann das Risiko verringert sein, dass das Stellglied im Betrieb der Küchenmaschine ungewollt die Justierung der Hebeleinrichtung verstellt.

Vorzugsweise ist ein Anschlag vorgesehen, um eine Translationsstrecke für das Stellglied zu begrenzen. Auf diese Weise kann beispielsweise verhindert werden, dass das Stellglied aus dem Führungsabschnitt im Grundkörper heraustranslatiert wird, und es so zu einer unkontrollierten und plötzlichen Neujustage der Hebeleinrichtung kommt. Auch kann eine Beschädigung des Mittels zum Justieren der Hebeleinrichtung oder des Schwenkarms verhindert werden, wenn durch einen Anschlag die Translationsstrecke insofern begrenzt wird, so dass eine maximale Kraftwirkung auf das Mittel zum Justieren der Hebeleinrichtung nicht überschritten werden kann. Vorzugsweise ist die Translationsstrecke in beide Translationsrichtungen begrenzt, wobei eine Bodenwand des Küchengeräts eine Begrenzung darstellt und der Anschlag als zweite Begrenzung an einem Ende der Translationsstrecke vorgesehen ist, das von der Bodenwand beabstandet ist. Besonders vorzugsweise ist der Anschlag am Grundkörper des Küchengeräts vorgesehen, nochmals besonders vorzugsweise an einer Innenwand des Küchengeräts. Auf diese Weise kann, vorzugsweise, der Anschlag an dem Führungsabschnitt oder an dem Grundkörper des Küchengeräts einstückig verbunden werden, besonders vorzugsweise im Spritzgussverfahren oder durch Verkleben.

Bevorzugt ist, dass die Hebeleinrichtung ein kraftaktives Mittel, vorzugsweise eine Schraubenfeder, umfasst, wobei das Stellglied des Mittels zum Justieren der Hebeleinrichtung mit dem kraftaktiven Mittel in einem Eingriffsbereich zusammenwirkt. Das kraftaktive Mittel stellt eine geeignete Unterstützungskraft für den Schwenkarm bereit, wobei die Unterstützungskraft gemäß der vorliegenden Erfindung mittels des Stellglieds einstellbar, beziehungsweise fein justierbar ist.

In einer bevorzugten Ausführungsform sind das kraftaktive Mittel und das Stellglied in dem Eingriffsbereich derart miteinander verbunden, dass das kraftaktive Mittel an dem Stellglied um einen Winkel verschwenkbar gelagert ist. Diese Ausführungsform kann den Vorteil haben, dass sich das kraftaktive Mittel beim Translatieren des Stellgliedes automatisch hinsichtlich sowohl des Stellgliedes als auch der Hebeleinrichtung und des Schwenkarms in einen günstigen Winkel bringen kann, sodass eine gute Kraftübertragung unabhängig von der Translationsstellung des Stellgliedes möglich ist. Es ist bevorzugt, dass der Eingriffsbereich seitens des kraftaktiven Mittels zu diesem Zweck im Wesentlichen hakenartig, insbesondere c-förmig, ausgestaltet ist. Der Eingriffsbereich seitens des Stellgliedes ist vorzugsweise als im Wesentlichen halbkreisförmige Aufnahme, bezogen auf einen Querschnitt, für das kraftaktive Mittel ausgeführt. So kann ein freies Schwenken zwischen Stellglied und kraftaktivem Mittel erlaubt werden.

Vorzugsweise ist das Stellglied aus einem Material hergestellt, das ein verstärktes Material, insbesondere ein glasfaserverstärktes Material umfasst. Ein solches Glasfasermaterial ist beispielsweise PA 6.6 GF30. Es weist einen sehr hohen Dehnwiderstand auf und kann folglich die Kraft des kraftaktiven Mittels gut aufnehmen.

Für ein Verfahren zum Justieren einer Hebeleinrichtung zum Unterstützen einer Schwenkbewegung eines Schwenkarms eines Küchengeräts, bei dem das Justieren der Hebeleinrichtung durch Translatieren eines Stellgliedes erfolgt, ist vorzugsweise vorgesehen, dass das Justieren der Hebeleinrichtung durch Translatieren eines Stellgliedes erfolgt, das an einer Bodenwand der Küchenmaschine betätigbar ist. So kann die Betätigung für das Stellglied vorteilhafterweise im Betrieb der Küchenmaschine auf einfache Weise verdeckt sein.

Ferner ist für ein solches Verfahren bevorzugt, dass die Hebeleinrichtung durch Betätigen einer Justierwelle justiert wird, die mit dem Stellglied, das zwischen Justierwelle und Hebeleinrichtung kraftübertragend angeordnet ist, in Wirkverbindung steht. Durch die Nutzung einer Justierwelle kann die Lokalisierung des Stellgliedes innerhalb des Grundkörpers des Küchengeräts weitgehend frei gewählt werden, jedoch mittels der Justierwelle trotzdem das Stellglied translatiert werden.

Schließlich wird dieses Verfahren bevorzugt bei solchen Küchengeräten eingesetzt, bei denen die Hebeleinrichtung dergestalt ausgebildet ist, das Maß des Unterstützens der Schwenkbewegung des Schwenkarms des Küchengerätes einzustellen. Gerade in dieser Hinsicht kann das Justieren der Hebeleinrichtung durch Translatieren eines Stellgliedes besonders sinnvoll sein.

### Kurzbeschreibung der Zeichnungen

Weitere vorteilhafte Ausgestaltungen der Erfindung werden nachfolgend anhand von in den Zeichnungen dargestellten Ausführungsbeispielen, auf welche die Erfindung jedoch nicht beschränkt ist, näher beschrieben. Es zeigen schematisch:
Figur 1 einen Querschnitt durch ein erfindungsgemäßes Küchengerät, an dem die Schwenkbewegung des Schwenkarms veranschaulicht ist;
Figur 2 einen Grundkörper eines Küchengerätes, in dem sich ein translatierbares Stellglied befindet, mit dem eine Hebeleinrichtung justiert werden kann;
Figur 3 eine Ansicht senkrecht zu den Darstellungen in den Figuren 1 und 2, bei der Details des Mittels zum Justieren der Hebeleinrichtung, insbesondere des Stellglieds, abgebildet sind; und
Figur 4 ein Mittel zum Justieren der Hebeleinrichtung, das ein kraftaktives Mittel, ein Stellglied und eine Justierwelle umfasst.

### Detaillierte Beschreibung von Ausführungen der Erfindung

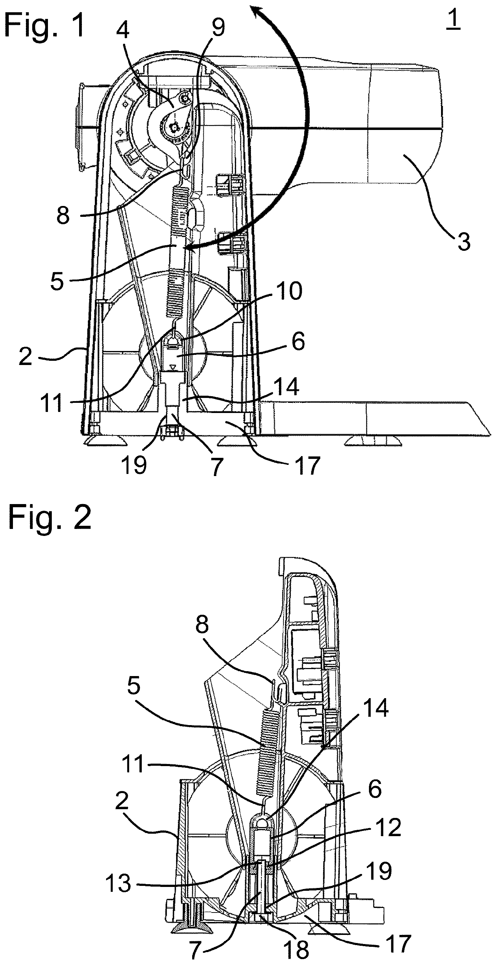

Die Figuren 1 bis 4 zeigen ein erfindungsgemäßes Küchengerät 1 oder Elemente, die für ein erfindungsgemäßes Küchengerät 1 von besonderer Bedeutung sein können.

Figur 1 zeigt einen Querschnitt durch ein erfindungsgemäßes Küchengerät 1. Das Küchengerät 1 umfasst einen Grundkörper 2 und einen Schwenkarm 3. Der Schwenkarm 3 kann, wie in Figur 1 durch die Pfeile veranschaulicht ist, gegenüber dem Grundkörper 2 verschwenkt werden. Zudem weist das Küchengerät 1 eine Hebeleinrichtung 4 zum Unterstützen einer Schwenkbewegung des Schwenkarms 3 und ein Mittel zum Justieren der Hebeleinrichtung 4 auf. Im vorliegenden Ausführungsbeispiel handelt es sich um ein Mittel zum Justieren der Hebeleinrichtung 4, das derart ausgebildet ist, das Maß des Unterstützens der Schwenkbewegung des Schwenkarms 3 einzustellen. So kann ein gleichbleibendes Maß an Unterstützung trotz herstellungsbedingten und/oder montagebedingten Toleranzen, die zu unterschiedlichen Funktionsverhalten der verwendeten Bauteile führen können, gewährleistet werden. Die grundsätzliche Wirkung der Hebeleinrichtung 4 und der Einfluss des Mittels zum Justierens der Hebeleinrichtung 4 ist aus der WO 2012/025430 A bereits hinlänglich bekannt, weshalb an dieser Stelle auf detaillierte Ausführungen dazu verzichtet wird.

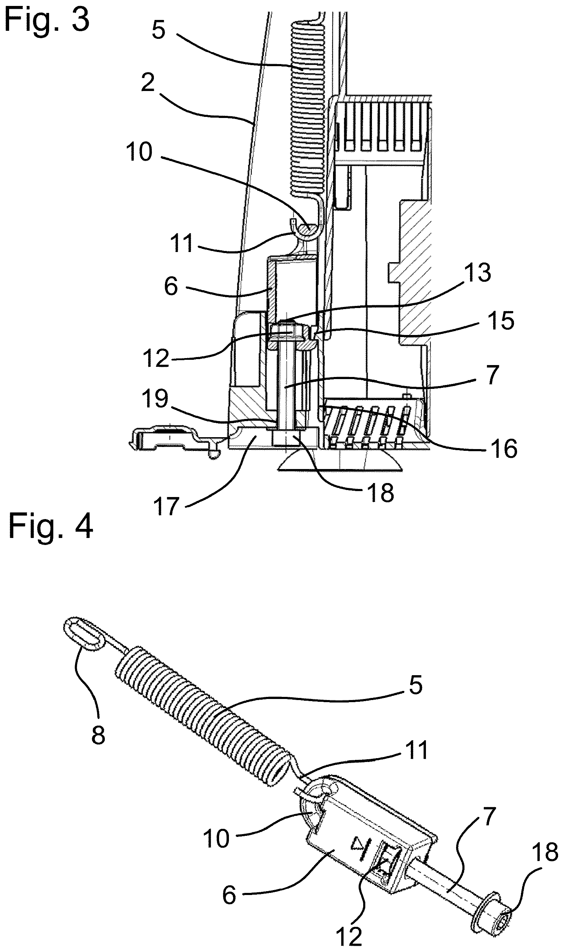

Das Mittel zum Justieren der Hebeleinrichtung 4 umfasst, wie in Figur 4 im Detail zu sehen ist, im Ausführungsbeispiel eine Schraubenfeder 5, die als kraftaktives Mittel dient, und ein Stellglied 6 sowie eine Justierwelle 7. Wie besonders deutlich in Figur 3 zu erkennen ist, ist ein erstes Ende 8 der Schraubenfeder 5 in einen Haken 9 an der Hebeleinrichtung 4 lösbar eingehängt. Weiterhin wirkt die Schraubenfeder 5 mit dem Stellglied 6 des Mittels zum Justieren der Hebeleinrichtung 4 in einem Eingriffsbereich 10 zusammen. Ein zweites Ende 11 der Schraubenfeder 5 ist zu diesem Zweck in den Eingriffsbereich 10 des Stellgliedes 6 eingehängt. Dabei sind die Schraubenfeder 5 und das Stellglied 6 derart miteinander verbunden, dass die Schraubenfeder 5 an dem Stellglied 6 um einen Winkel verschwenkbar gelagert ist.

Um eine Kraft, die zwischen Stellglied 6 und Schraubenfeder 5 auftritt, möglichst gut aufnehmen zu können, umfasst das Stellglied 6 ein verstärktes Material, in diesem Fall das glasfaserverstärkte Material PA 6.6 GF 30. Das Stellglied 6 ist als viereckiger Zylinder gestaltet. Innerhalb des Stellglieds 6 ist an einem Ende, das dem Eingriffsbereich 10 fernliegt, eine Mutter 12 aus Edelstahl angeordnet. Diese kann ein erstes Ende 13 der Justierwelle 7, die im vorliegenden Fall als Schraube, die ebenfalls aus Edelstahl besteht, mit einem Schraubkopf ausgeführt ist, aufnehmen. Die Justierwelle 7 ist in der Mutter 12 seitens des Stellglieds 6 um eine Symmetrieachse drehbar festgelegt, wobei die Mutter 12 in dem Stellglied 6 rotationsfest und bezogen auf das Stellglied 6 ortsfest festgelegt ist. Sowohl das erste Ende 13 der Justierwelle 7 als auch die Mutter 12 weisen dafür ein entsprechend geeignetes Schraubgewinde auf.

Das Stellglied 6 ist, wie beispielsweise in den Figuren 2 und 3 erkennbar ist, im vorliegenden Ausführungsbeispiel translatierbar eingerichtet, um die Hebeleinrichtung 4 zu justieren. Um das Stellglied 6 zu translatieren, ist die Justierwelle 7 mit dem Stellglied 6 wirkverbunden, so dass durch Betätigen der Justierwelle 7 das Stellglied 6 translatiert wird. Die Translation des Stellglieds 6 erfolgt relativ zum Grundkörper 2 des Küchengeräts 1. Durch Betätigen der Justierwelle 7 kann das translatierende Stellglied 6 justierend auf die Hebeleinrichtung 4 einwirken, wie es in ähnlicher Weise aus der WO 2012/025430 A bekannt ist. In der Lösung, die von der WO 2012/025430 A vorgeschlagen wird, ist jedoch im Unterschied zur vorliegenden Erfindung vorgesehen, dass das Stellglied 6 durch Rotation justierend auf die Hebeleinrichtung 4 einwirkt. Wie ebenfalls in Figur 3 zu sehen ist, ist im Grundkörper des Küchengeräts 1 ein Führungsabschnitt 14 bereitgestellt, um das Stellglied 6 senkrecht zu einer Translationsrichtung zu stabilisieren. Innerhalb dieses Führungsabschnitts 14 kann das Stellglied 6 frei translatiert werden. Es ist ein Anschlag 15 vorgesehen, um eine Translationsstrecke für das Stellglied 6 zu begrenzen. So kann verhindert werden, dass Stellglied 6 in eine Stellung translatiert wird, in der durch die Schraubenfeder 5 auf die Hebeleinrichtung 4 eine unerwünscht große oder kleine Kraft übertragen würde. Der Anschlag 15 ist an einer Innenwand 16 des Grundkörpers 2 angeordnet.

Um eine für den Benutzer möglichst ästhetische Gestaltung des Grundkörpers 2 des Küchengeräts 1 zu ermöglichen und zusätzliche Abdeckelemente einsparen zu können, ist das Mittel zum Justieren der Hebeleinrichtung 4 an einer Bodenwand 17 des Küchengeräts 1 betätigbar, wie in den Querschnittsskizzen gemäß den Figuren 1, 2 und 3 erkennbar ist. Um betätigt werden zu können, ist der Schraubkopf, der sich an einem zweiten Ende 18 der Justierwelle 7 befindet, mit einer Kupplung für einen Inbus-Schlüssel versehen. Das zweite Ende 18 der Justierwelle 7 ist über den Schraubkopf drehbar und dem Grundkörper 2 gegenüber ortsfest an der Bodenwand 17 des Küchengeräts 1 gelagert. Das erste Ende 13 der Justierwelle 7, das das Schraubgewinde trägt, ragt durch eine Öffnung 19 in der Bodenwand 17 in den Innenraum des Grundkörpers 2 hinein. Da der Schraubkopf einen verhältnismäßig zu großen Durchmesser aufweist, um ebenfalls durch die Öffnung 19 in der Bodenwand 17 in den Innenraum des Grundkörpers 2 eindringen zu können, wird beim Anziehen der Justierwelle 7, im vorliegenden Fall beim Drehen der Schraube im Uhrzeigersinn, das Stellglied 6 auf den Schraubkopf zugezogen, während sich das erste Ende 13 der Justierwelle 7 in die Mutter 12 im Stellglied 6 hineinschraubt. Auf diese Weise wird das Stellglied 6 gegenüber dem Grundkörper 2 des Küchengeräts 1 im Führungsabschnitt 14 translatiert, so dass eine Kraft, die von dem Mittel zum Justieren der Hebeleinrichtung 4 mittels des Hakens 9 auf die Hebeleinrichtung 4 übertragen wird, variiert werden kann. Weil der Führungsabschnitt 14 im Grundkörper 2 eine stabile lineare Translation ermöglicht, kann die Stellung des Stellglieds 6 entlang der Translationsstrecke sehr exakt ausgewählt werden. Da zudem die Schraubenfeder 5 an dem Stellglied 6 um einen Winkel verschwenkbar gelagert ist, kann sich die Schraubenfeder 5 mit Vorteil beim Translatieren des Stellgliedes 6 selbsttätig in eine optimale Position hinsichtlich des Hakens 9 an der Hebeleinrichtung 4 bringen. Auch seitens des Hakens 9 an der Hebeleinrichtung 4 ist die Schraubenfeder 5 verschwenkbar aufgehangen, so dass auch an dieser Stelle selbsttätig ein optimaler Winkel eingenommen wird. So wird stets und ohne äußeren Eingriff eine optimale Kraftübertragung zwischen Mittel zum Justieren der Hebeleinrichtung 4 und der Hebeleinrichtung 4 selbst ermöglicht.

Auf die oben beschriebene Weise erlaubt die Erfindung, ein Küchengerät 1, bei dem ein Grundkörper 2, ein Schwenkarm 3, eine Hebeleinrichtung 4 zum Unterstützen einer Schwenkbewegung des Schwenkarms 3 und ein Mittel zum Justieren der Hebeleinrichtung 4 vorgesehen sind, zu verbessern. Ist das Stellglied 6 des Mittels zum Justieren der Hebeleinrichtung 4 translatierbar eingerichtet, kann die Justierung vorteilhafterweise exakter durchgeführt werden. Zudem wird es ermöglicht, die Justierwelle 7 des Stellglieds 6 am Grundkörper 2 des Küchengeräts 1 so anzuordnen, dass sie im Betriebszustand der Küchenmaschine 1 nicht sichtbar ist, ohne dass dafür aufwändige oder auch kostenintensive Abdeckungen bereitgestellt werden müssten.

### Bezugszeichenliste

- 1: Küchengerät
- 2: Grundkörper
- 3: Schwenkarm
- 4: Hebeleinrichtung
- 5: Schraubenfeder
- 6: Stellglied
- 7: Justierwelle
- 8: Erstes Ende der Schraubenfeder
- 9: Haken
- 10: Eingriffsbereich
- 11: Zweites Ende der Schraubenfeder
- 12: Mutter
- 13: Erstes Ende der Justierwelle
- 14: Führungsabschnitt
- 15: Anschlag
- 16: Innenwand
- 17: Bodenwand
- 18: Zweites Ende der Justierwelle
- 19: Öffnung

## Patentansprüche

1. Küchengerät (1) mit einem Grundkörper (2), einem Schwenkarm (3), der schwenkbar am Grundkörper (2) angeordnet ist, einer Hebeleinrichtung (4) zum Unterstützen einer Schwenkbewegung des Schwenkarms (3), und einem Mittel zum Justieren der Hebeleinrichtung (4), das ein Stellglied (6) umfasst,
**dadurch gekennzeichnet, dass**
das Stellglied (6) linear translatierbar ist, um die Hebeleinrichtung (4) zu justieren.

2. Küchengerät (1) nach Anspruch 1,
**dadurch gekennzeichnet, dass**
das Mittel zum Justieren der Hebeleinrichtung (4) dergestalt ausgebildet ist, das Maß des Unterstützens der Schwenkbewegung einzustellen.

3. Küchengerät (1) nach Anspruch 1 oder 2,
**dadurch gekennzeichnet, dass**
das Mittel zum Justieren der Hebeleinrichtung (4) eine Justierwelle (7) umfasst, die mit dem Stellglied (6) wirkverbunden ist, um das Stellglied (6) durch Betätigen der Justierwelle (7) zu translatieren.

4. Küchengerät (1) nach Anspruch 3,
**dadurch gekennzeichnet, dass**
die Justierwelle (7) mit einem ersten Ende in einer Mutter (12) im Stellglied (6) um eine Symmetrieachse drehbar festgelegt ist, wobei die Mutter (12) seitens des Stellglieds (6) rotationsfest und bezogen auf das Stellglied (6) ortsfest festgelegt ist.

5. Küchengerät nach einem der Ansprüche 3 oder 4,
**dadurch gekennzeichnet, dass**
die Justierwelle (7) als Schraube mit einem Schraubkopf ausgeführt ist.

6. Küchengerät (1) nach einem der vorhergehenden Ansprüche,
**dadurch gekennzeichnet, dass**
das Mittel zum Justieren der Hebeleinrichtung (4) an einer Bodenwand (17) des Küchengeräts (1) betätigbar ist.

7. Küchengerät (1) nach einem der vorhergehenden Ansprüche,
**dadurch gekennzeichnet, dass**
im Grundkörper (2) ein Führungsabschnitt (14) bereitgestellt ist, um das Stellglied (6) senkrecht zur Translationsrichtung zu stabilisieren.

8. Küchengerät (1) nach einem der vorhergehenden Ansprüche,
**dadurch gekennzeichnet, dass**
ein Anschlag (15) vorgesehen ist, um eine Translationsstrecke für das Stellglied (6) zu begrenzen.

9. Küchengerät (1) nach einem der vorhergehenden Ansprüche,
**dadurch gekennzeichnet, dass**
die Hebeleinrichtung (4) ein kraftaktives Mittel, vorzugsweise eine Schraubenfeder (5), umfasst, wobei das Stellglied (6) des Mittels zum Justieren der Hebeleinrichtung (4) mit dem kraftaktiven Mittel in einem Eingriffsbereich (10) zusammenwirkt.

10. Küchengerät (1) nach Anspruch 9
**dadurch gekennzeichnet, dass**
das kraftaktive Mittel und das Stellglied (6) in dem Eingriffsbereich derart miteinander verbunden sind, dass das kraftaktive Mittel an dem Stellglied um einen Winkel verschwenkbar gelagert ist.

11. Küchengerät (1) nach einem der vorhergehenden Ansprüche,
**dadurch gekennzeichnet, dass**
das Stellglied (6) aus einem Material hergestellt ist, das ein verstärktes Material, insbesondere ein Glasfaser verstärktes Material, umfasst.

12. Verfahren zum Justieren einer Hebeleinrichtung (4) eines Küchengeräts (1), wobei die Hebeleinrichtung (4) zum Unterstützen einer Schwenkbewegung eines Schwenkarms (3) eines Küchengeräts (1) eingerichtet ist, **dadurch gekennzeichnet, dass** das Justieren der Hebeleinrichtung (4) durch lineares Translatieren eines Stellgliedes (6) erfolgt.

13. Verfahren zum Justieren einer Hebeleinrichtung (4) nach Anspruch 12, **dadurch gekennzeichnet, dass** das Justieren der Hebeleinrichtung (4) durch Translatieren eines Stellgliedes (6) erfolgt, das an einer Bodenwand (17) des Küchengeräts (1) betätigbar ist.

14. Verfahren zum Justieren einer Hebeleinrichtung (4) nach Anspruch 12 oder 13, **dadurch gekennzeichnet, dass** die Hebeleinrichtung (4) durch Betätigen einer Justierwelle (7) justiert wird, die mit dem Stellglied (6), das zwischen Justierwelle (7) und Hebeleinrichtung (4) kraftübertragend angeordnet ist, in Wirkverbindung steht.

15. Verfahren zum Justieren einer Hebeleinrichtung (4) nach einem der Ansprüche 12, 13 oder 14, **dadurch gekennzeichnet, dass** die Hebeleinrichtung (4) dergestalt ausgebildet ist, das Maß des Unterstützens der Schwenkbewegung einzustellen.

## Claims

1. A kitchen appliance (1) having a main body (2), a pivot arm (3), which is arranged pivotably on the main body (2), a lever device (4) for supporting a pivoting movement of the pivot arm (3) and a means of adjusting the lever device (4), which comprises an actuator (6),
**characterized in that**
the actuator (6) can be translated linearly, in order to adjust the lever device (4).

2. The kitchen appliance (1) as claimed in claim 1,
**characterized in that**
the means of adjusting the lever device (4) is embodied so as to adjust the degree to which the pivoting movement is supported.

3. A kitchen appliance (1) as claimed in claim 1 or 2,
**characterized in that**
the means of adjusting the lever device (4) comprises an adjusting shaft (7), which is actively connected to the actuator (6), in order to translate the actuator (6) by actuating the adjusting shaft (7).

4. The kitchen appliance (1) as claimed in claim 3,
**characterized in that**
the adjusting shaft (7) is fixed rotatably about an axis of symmetry with a first end in a nut (12) in the actuator (6), wherein the nut (12) is rotationally fixed on the part of the actuator (6) and is immobily fixed with respect to the actuator (6).

5. The kitchen appliance as claimed in one of claims 3 or 4,
**characterized in that**
the adjusting shaft (7) is embodied as a screw with a screw head.

6. The kitchen appliance (1) as claimed in one of the preceding claims,
**characterized in that**
the means for adjusting the lever device (4) can be actuated on a base wall (17) of the kitchen appliance (1).

7. The kitchen appliance (1) as claimed in one of the preceding claims,
**characterized in that**
a guide section (14) is provided in the main body (2), in order to stabilize the actuator (6) at right angles to the translation direction.

8. The kitchen appliance (1) as claimed in one of the preceding claims,
**characterized in that**
a stop (15) is provided, in order to delimit a translation path for the actuator (6).

9. The kitchen appliance (1) as claimed in one of the preceding claims,
**characterized in that**
the lever device (4) comprises a force-active means, preferably a helical spring (5), wherein the actuator (6) of the means of adjusting the lever device (4) interacts with the force-active means in an area of engagement (10).

10. The kitchen appliance (1) as claimed in claim 9,
**characterized in that**
the force-active means and the actuator (6) are connected to one another in the area of engagement such that the force-active means is supported pivotably about an angle on the actuator.

11. The kitchen appliance (1) as claimed in one of the preceding claims,
**characterized in that**
the actuator (6) is manufactured from a material which comprises a reinforced material, in particular a glass fiber-reinforced material.

12. A method of adjusting a lever device (4) of a kitchen appliance (1), wherein the lever device (4) is configured to support a pivoting movement of a pivot arm (3) of a kitchen appliance (1), **characterized in that** the adjustment of the lever device (4) is carried out by means of linear translation of an actuator (6).

13. The method of adjusting a lever device (4) as claimed in claim 12, **characterized in that** the adjustment of the lever device (4) is carried out by translating an actuator (6), which can be actuated on a base wall (17) of the kitchen appliance (1).

14. The method of adjusting a lever device (4) as claimed in claim 12 or 13, **characterized in that** the lever device (4) is adjusted by actuating an adjusting shaft (7), which is actively connected to the actuator (6), which is arranged between the adjusting shaft (7) and lever device (4) in a force-transmitting manner.

15. The method of adjusting a lever device (4) as claimed in one of claims 12 , 13 or 14, **characterized in that** the lever device (4) is embodied so as to adjust the degree to which the pivoting movement is supported.

## Revendications

1. Appareil de cuisine (1) avec un corps de base (2), un bras pivotant (3), disposé de façon pivotante sur le corps de base (2), un dispositif à levier (4) afin de soutenir un mouvement pivotant d'un bras pivotant (3), et un moyen pour l'ajustement du dispositif à levier (4), lequel moyen englobe un actionneur (6), **caractérisé en ce que** l'actionneur (6) est susceptible de décrire une translation linéaire, afin d'ajuster le dispositif à levier (4).

2. Appareil de cuisine (1) selon la revendication 1, **caractérisé en ce que** le moyen pour l'ajustement du dispositif à levier (4) est exécuté de sorte à régler l'ampleur du soutien du mouvement pivotant.

3. Appareil de cuisine (1) selon la revendication 1 ou 2, **caractérisé en ce que** le moyen pour l'ajustement du dispositif à levier (4) englobe un arbre d'ajustement (7) relié fonctionnellement à l'actionneur (6), afin de faire décrire une translation à l'actionneur (6) via l'actionnement de l'arbre d'ajustement (7).

4. Appareil de cuisine (1) selon la revendication 3, **caractérisé en ce que** l'arbre d'ajustement (7) est fixé de façon rotative autour d'un axe de symétrie par une première extrémité dans un écrou (12) dans l'actionneur (6), l'écrou (12) étant fixé de manière fixe en rotation du côté de l'actionneur (6) et fixe par rapport à l'actionneur (6).

5. Appareil de cuisine selon l'une des revendications 3 ou 4, **caractérisé en ce que** l'arbre d'ajustement (7) est exécuté sous la forme d'une vis avec une tête de vis.

6. Appareil de cuisine (1) selon l'une des revendications précédentes, **caractérisé en ce que** le moyen pour l'ajustement du dispositif à levier (4) est actionnable sur une paroi de fond (17) de l'appareil de cuisine (1).

7. Appareil de cuisine (1) selon l'une des revendications précédentes, **caractérisé en ce qu'**une section de guidage (14) est prévue dans le corps de base (2), afin de stabiliser l'actionneur (6) à la verticale du dispositif de translation.

8. Appareil de cuisine (1) selon l'une des revendications précédentes, **caractérisé en ce qu'**une butée (15) est prévue, afin de limiter un déplacement translatoire pour l'actionneur (6).

9. Appareil de cuisine (1) selon l'une des revendications précédentes, **caractérisé en ce que** le dispositif à levier (4) englobe un moyen à action de force, de préférence un ressort à boudin (5), l'actionneur (6) du moyen d'ajustement du dispositif à levier (4) coopérant avec le moyen à action de force dans une zone d'engrènement (10).

10. Appareil de cuisine (1) selon la revendication 9, **caractérisé en ce que** le moyen à action de force et l'actionneur (6) sont reliés de telle façon dans la zone d'engrènement que le moyen à action de force est logé de façon pivotante selon un angle sur l'actionneur.

11. Appareil de cuisine (1) selon l'une des revendications précédentes, **caractérisé en ce que** l'actionneur (6) est fabriqué en un matériau qui englobe un matériau renforcé, en particulier un matériau renforcé à la fibre de verre.

12. Procédé d'ajustement d'un dispositif à levier (4) d'un appareil de cuisine (1), dans lequel le dispositif à levier (4) est aménagé afin de soutenir un mouvement pivotant d'un bras pivotant (3) d'un appareil de cuisine (1), **caractérisé en ce que** l'ajustement du dispositif à levier (4) s'opère via la translation linéaire d'un actionneur (6).

13. Procédé d'ajustement d'un dispositif à levier (4) selon la revendication 12, **caractérisé en ce que** l'ajustement du dispositif à levier (4) s'opère via la translation d'un actionneur (6) actionnable sur une paroi de fond (17) de l'appareil de cuisine (1).

14. Procédé d'ajustement d'un dispositif à levier (4) selon la revendication 12 ou 13, **caractérisé en ce que** le dispositif à levier (4) est ajusté via l'actionnement d'un arbre d'ajustement (7), lequel se trouve en liaison fonctionnelle avec l'actionneur (6), disposé de manière à transmettre les forces entre l'arbre d'ajustement (7) et le dispositif à levier (4).

15. Procédé d'ajustement d'un dispositif à levier (4) selon l'une des revendications 12, 13 ou 14, **caractérisé en ce que** le dispositif à levier (4) est exécuté de sorte à régler l'ampleur du soutien du mouvement pivotant.
